# FASCICULE DE BREVET EUROPEEN

(11) **EP 1 766 220 B1**
(45) Date de publication et mention de la délivrance du brevet: **01.10.2008**
(21) Numéro de dépôt: 05775553.0
(22) Date de dépôt: 31.05.2005
(51) Int. Cl.: F02K 9/56, G01F 23/296

(54) **PROCEDES DE DETECTION DE LA VIDANGE COMPLETE D'UN RESERVOIR D'ERGOL ET DE GESTION D'ERGOL A BORD D'UN SATELLITE**
VERFAHREN ZUR ERMITTLUNG DER KOMPLETTEN ENTLEERUNG EINES TREIBSTOFFTANKS UND ZUR TREIBSTOFFVERWALTUNG AN BORD EINES SATELLITEN
METHOD FOR DETECTING COMPLETE DRAINING OF A PROPELLANT TANK AND FOR PROPELLANT MANAGEMENT ONBOARD A SATELLITE

(30) Priorité: 10.06.2004 FR 0406282
(43) Date de publication de la demande: 28.03.2007
(73) Titulaire: ASTRIUM SAS, 75016 Paris (FR)
(72) Inventeur: JALLADE, Sophie, Martine, F-31320 Castanet Tolosan (FR)
(74) Mandataire: Bérogin, Francis
(86) Numéro de dépôt international: PCT/FR2005/001331
(87) Numéro de publication internationale: WO 2006/005833

(56) Documents cités:
- FR-A- 2 585 669
- FR-A- 2 635 309
- FR-A- 2 635 499
- FR-A- 2 656 381
- GB-A- 2 177 510
- PATENT ABSTRACTS OF JAPAN vol. 2000, no. 20, 10 juillet 2001 (2001-07-10) -& JP 2001 082249 A (TOSHIBA CORP), 27 mars 2001 (2001-03-27)

## Description

La présente invention concerne un procédé de détection de la vidange complète d'au moins un réservoir d'ergol liquide à tension de surface d'un satellite artificiel, en particulier d'un satellite géosynchrone ou géostationnaire, du type sur lequel ce réservoir d'ergol est relié, par une conduite de vidange sur laquelle est montée une vanne de vidange de réservoir, à au moins une conduite d'alimentation d'une tuyère ou pluralité de tuyères, dédiée à la commande d'attitude et/ou d'orbite du satellite au sein d'un système propulsif du satellite, et sur laquelle conduite est montée une vanne d'alimentation de tuyère(s), commandée par intermittence à l'ouverture et à la fermeture pour actionner par intermittence ladite tuyère ou pluralité de tuyères.

Un tel procédé est décrit dans le document FR 2 635 499 qui est considéré comme l'art antérieur le plus proche.

L'invention concerne également un procédé de gestion d'ergol à bord d'un satellite artificiel en orbite, procédé dont une étape essentielle est constituée par le procédé de détection de la vidange complète d'au moins un réservoir d'ergol liquide à tension de surface selon l'invention, car la détection de la vidange complète d'un réservoir d'ergol est un paramètre déterminant pour la mise en oeuvre de stratégies de commande de l'alimentation des tuyères ou pluralités de tuyères avec des quantités résiduelles d'ergols dans un ou plusieurs autres réservoirs, pendant la fin de la durée de vie opérationnelle du satellite et/ou pour la ré-orbitation ou dé-orbitation du satellite sur une orbite cimetière.

En effet, la dé-orbitation ou ré-orbitation des satellites artificiels en fin de période opérationnelle, est une opération qui tend à devenir systématique pour deux raisons majeures :
- concernant les satellites géostationnaires, l'orbite géostationnaire ne peut recevoir qu'un nombre limité de satellites occupant des positions pré-définies et allouées par l'ITU (International Telecommunication Union), et il est souhaitable, voire nécessaire, de libérer ces positions en fin de vie utile des satellites, afin que ces positions puissent être réutilisées ;
- concernant les satellites en orbites basses, ces satellites sont en nombre croissant et présentent, à plus ou moins long terme, des risques de collisions entre eux, ou, ce qui pourrait être beaucoup plus grave, avec une station spatiale habitée, et des règlements sont en cours d'élaboration pour limiter la durée de vie en orbite de tels satellites après la fin de leur mission, une recommandation communément admise à ce jour faisant état d'une durée de vie limitée à 25 ans.

La dé-orbitation ou ré-orbitation d'un satellite est généralement assurée en utilisant la poussée de l'une au moins de deux tuyères ou pluralités de tuyères servant au contrôle d'orbite et/ou d'attitude du satellite pendant sa phase opérationnelle, après laquelle la quantité résiduelle d'ergol, ou une partie de cette quantité résiduelle, est employée pour alimenter ces tuyères ou pluralités de tuyères et effectuer cette manoeuvre de dé-orbitation ou ré-orbitation.
Pour un satellite commercial, et en particulier un satellite de télécommunication en orbite géostationnaire, l'intérêt qu'il y a à prolonger au maximum la phase opérationnelle du satellite apparaît immédiatement. L'opérateur du satellite a tout intérêt à déclencher la séquence de changement d'orbite le plus tard possible, tout en restant compatible avec les besoins minimaux en ergol nécessaires à l'alimentation des tuyères ou pluralités de tuyères pour assurer la mise sur une orbite dite « cimetière ».

A cet effet, l'invention propose, d'une part, un procédé simple et fiable de détection de la vidange complète d'au moins un réservoir d'ergol liquide à tension de surface d'un satellite artificiel, et, d'autre part, un procédé comportant, comme étape essentielle, le procédé précité de détection de la vidange complète d'un réservoir d'ergol, pour assurer la gestion d'ergol à bord du satellite, et en particulier le contrôle du ou des ergols, en vue d'une utilisation optimale du ou des ergols restant dans des réservoirs du satellite afin de retarder au maximum la mise en oeuvre de la séquence de dé-orbitation ou ré-orbitation du satellite.

L'invention propose donc des procédés de détection de la vidange complète d'au moins un réservoir d'ergol et de gestion d'ergol à bord d'un satellite artificiel en orbite, procédés qui sont particulièrement adaptés à une utilisation optimale d'ergol en fin de vie opérationnelle d'un satellite en orbite et/ou pour une manoeuvre de dé-orbitation ou ré-orbitation du satellite en fin de vie.

A cet effet, le procédé de détection de la vidange complète d'au moins un réservoir d'ergol liquide à tension de surface d'un satellite artificiel du type sur lequel le réservoir est relié à au moins une tuyère ou pluralité de tuyères de la manière présentée ci-dessus, *se* ***caractérise en* ce qu**'il comprend au moins les étapes consistant, à l'aide d'au moins un capteur de pression monté sur la conduite de vidange ou d'alimentation entre lesdites vannes de vidange et d'alimentation, à détecter les ondes d'oscillation de pression (coups de bélier) résultant des ouvertures et fermetures de ladite vanne d'alimentation et parcourant les conduites d'alimentation et de vidange de la vanne d'alimentation, en aval, vers ledit réservoir, en amont, puis à détecter, à la suite d'une commande de ladite vanne d'alimentation, l'amortissement au moins partiel, sinon la disparition, desdites ondes d'oscillations de pression témoignant du passage de la transition entre de l'ergol liquide et un gaz de pressurisation de l'ergol ( tel que de l'hélium utilisé pour pressuriser l'ergol dans le réservoir) au niveau du capteur de pression, et donc de la vidange complète du réservoir.

On peut ainsi détecter et contrôler la vidange en ergol liquide des réservoirs du satellite, le principe de cette détection reposant sur l'utilisation d'au moins un capteur de pression sur la ligne d'alimentation des moteurs en ergol en sortie du réservoir, la mesure effectuée par le ou les capteurs de pression permettant en particulier de définir l'instant de passage de la transition entre l'ergol liquide et le gaz de pressurisation au voisinage d'un capteur de pression, de sorte que, grâce à cette information, il est possible d'anticiper l'arrivée de bulles au niveau des moteurs à tuyères de commande d'attitude et/ou d'orbite.

Dans le cas où il n'existe qu'un seul réservoir par type d'ergol, alors que deux ergols, dont un carburant et un comburant, sont généralement nécessaires, l'information précité découlant de la mesure du ou des capteurs de pression permet notamment d'éviter la perte du contrôle du satellite en fin de vie, par manque d'ergol au niveau des moteurs, et de sécuriser les opérations à venir. En particulier, cela permet d'effectuer les opérations d'extinction du satellite en pointage nominal par télécommandes manuelles avec une visibilité du sol assurée.

Plus précisément, lorsque le satellite comprend un seul réservoir d'ergol liquide à tension de surface par type d'ergol, et que ce réservoir est relié, par une conduite de vidange sur laquelle est montée une vanne de vidange du réservoir, à deux conduites d'alimentation sur chacune desquelles est montée une vanne d'alimentation respective d'une tuyère ou pluralité de tuyères respective de commande d'attitude et/ou d'orbite d'un système propulsif du satellite, le procédé de gestion d'ergol selon l'invention se caractérise en ce qu'il comprend au moins les étapes consistant :
- à alimenter par intermittence l'une ou l'autre des deux tuyères ou pluralités de tuyères en ergol par des commandes à l'ouverture et fermeture de l'une ou l'autre des vannes d'alimentation, alors que ladite vanne de vidange du réservoir est ouverte,
- à contrôler la vidange en ergol dudit réservoir, et se caractérise en ce qu'il comprend également au moins l'étape consistant à détecter la vidange complète de ce réservoir par le procédé de détection de la vidange complète d'au moins un réservoir, selon la présente invention et tel que défini ci-dessus, et, à partir d'un signal d'au moins un capteur de pression détectant la vidange complète dudit réservoir, à commander l'arrêt de la manoeuvre en cours, et la fermeture de la vanne d'alimentation de ladite tuyère ou pluralité de tuyères actionnée au cours de ladite manoeuvre, afin de sécuriser des opérations à venir, et à effectuer des opérations d'extinction du satellite en pointage nominal par télécommandes manuelles avec une visibilité du sol assurée.

Par contre, dans le cas où il existe au moins deux réservoirs par type d'ergol, l'information précité, relative à l'instant de passage de la transition entre l'ergol liquide et un gaz de pressurisation au niveau d'un capteur de pression, permet, d'une part, de commuter l'alimentation en ergol des tuyères ou pluralités de tuyères d'un réservoir vide sur un second réservoir, tout en évitant de perdre le contrôle du satellite par manque d'ergol au niveau des moteurs, et, d'autre part, d'utiliser l'ergol contenu dans un second réservoir pour assurer un changement d'orbite du satellite, l'incertitude sur la connaissance de la quantité d'ergol restant utilisable étant ainsi limitée au second réservoir, ainsi qu'à d'éventuels réservoirs supplémentaires, puisque le premier réservoir de cet ergol est intégralement vidé.

Plus précisément, lorsque le satellite comprend, pour au moins un ergol, deux réservoirs d'ergol liquide à tension de surface reliés, chacun par une conduite de vidange respective sur laquelle est montée une vanne de vidange respective, à l'extrémité amont d'une conduite commune, dont l'extrémité aval est reliée en parallèle à chacune de deux tuyères ou pluralités de tuyères de commande d'attitude et/ou d'orbite d'un système propulsif du satellite, par une conduite d'alimentation respective sur laquelle est montée une vanne d'alimentation respective de la tuyère ou pluralité de tuyères correspondante, le procédé de gestion d'ergol à bord de ce satellite en orbite comprend au moins les étapes consistant:
- à alimenter par intermittence l'une ou l'autre des deux tuyères ou pluralités de tuyères en ergol par des commandes à l'ouverture et fermeture de l'une ou l'autre des vannes d'alimentation, alors que l'une des vannes de vidange est ouverte et l'autre fermée, de sorte que l'ergol est vidangé de l'un au moins des deux réservoirs,
- à fermer la vanne de vidange précédemment ouverte et ouvrir celle précédemment fermée, pour basculer l'alimentation des tuyères ou pluralités de tuyères depuis le réservoir précédemment vidangé à partir de l'autre réservoir, et
- à répéter, dans la mesure des besoins pour la commande d'attitude et/ou d'orbite du satellite, les deux étapes précédentes,
et se caractérise en ce qu'il comprend de plus au moins les étapes consistant :
- à contrôler la vidange en ergol liquide des deux réservoirs, et à détecter la vidange complète d'un premier réservoir par le procédé de détection de la vidange complète d'au moins un réservoir d'ergol liquide selon l'invention et tel que présenté ci-dessus puis à commander l'arrêt de la manoeuvre en cours et à commuter l'alimentation en ergol liquide du premier réservoir, qui est vide, sur le second réservoir, par une commande appropriée à l'ouverture de la vanne de vidange dudit second réservoir.

Dans cette seconde configuration, le procédé de gestion d'ergol selon l'invention consiste avantageusement de plus, à contrôler la vidange des deux réservoirs et à détecter la vidange complète d'un premier réservoir à l'aide d'au moins un capteur de pression aval, monté sur ladite conduite commune, et/ou d'au moins un capteur de pression amont, monté sur chacune des deux conduites de vidange, entre l'extrémité amont de la conduite commune et la vanne de vidange de réservoir correspondante.

Dans ce cas, si la détection de la vidange complète du premier réservoir est assurée par un capteur de pression amont, avant que du gaz de pressurisation de l'ergol n'atteigne ladite conduite commune, le procédé comprend également et avantageusement, après la commande de l'arrêt de la manoeuvre en cours, la reprise d'au moins une manoeuvre par l'actionnement de l'une ou l'autre des deux tuyères ou pluralités de tuyères, après commutation de leur alimentation sur le second réservoir du même ergol.

Par contre, si la détection de la vidange complète du premier réservoir de cet ergol est assurée par un capteur de pression aval, le procédé de gestion d'ergol selon l'invention comprend de plus et avantageusement, après l'arrêt de la manoeuvre en cours, des étapes consistant à commander la commutation de l'alimentation de ladite tuyère ou pluralité de tuyères, en action lors de la détection de la vidange complète, sur le second réservoir du même ergol, jusqu'à la détection d'une perturbation du fonctionnement de ladite tuyère ou pluralité de tuyères, à commander alors la fermeture de la vanne d'alimentation de ladite tuyère ou pluralité de tuyère et l'ouverture de la vanne d'alimentation de l'autre tuyère ou pluralité de tuyères, pour compenser les conséquences de ladite perturbation sur l'attitude et/ou l'orbite du satellite, puis à commander toute manoeuvre postérieure en alimentant ladite autre tuyère ou pluralité de tuyères à partir du deuxième réservoir du même ergol.

Dans ce cas, la détection de ladite perturbation du fonctionnement de la tuyère ou pluralité de tuyères en action lors de la détection de la vidange complète du premier réservoir est avantageusement assurée, à l'aide d'un critère de dépointage d'attitude du satellite, et à récupérer le pointage par l'actionnement de l'autre tuyère ou pluralité de tuyères, alimentée par le deuxième réservoir du même ergol.

Le critère de dépointage d'attitude du satellite peut être déterminé de nombreuses manières différentes, mais, selon une réalisation efficace en pratique, et propre à l'invention, il consiste à utiliser un seuil de dépointage vérifiant les contraintes suivantes :
- être supérieur aux dépointages enregistrés habituellement en manoeuvre, afin de ne pas déclencher de façon intempestive les opérations prévues après la détection de ladite perturbation, avant la détection de la vidange complète du premier réservoir,
- être inférieur à un seuil acceptable pour une mission, si celle-ci est en cours d'exécution, et
- être inférieur à un seuil de déclenchement du mode de reconfiguration du satellite, associé aux cas dégradés, en prenant une marge afin de permettre la récupération de l'attitude du satellite par actionnement de l'autre tuyère ou pluralité de tuyères.

Dans les différents modes de mise en oeuvre du procédé de gestion d'ergol selon l'invention, l'étape de commande de l'arrêt de la manoeuvre en cours peut être avantageusement assurée à partir d'un signal délivré par au moins un capteur de pression et/ou à l'aide d'un critère issu d'une analyse des informations données par au moins un capteur de pression.

Lorsque le satellite est équipé d'un système propulsif classique, à deux ergols contenus chacun dans deux réservoirs d'ergols liquides à tension de surface, formant deux couples de réservoirs associés dont chacun comprend un réservoir d'un premier ergol et un réservoir d'un second ergol, l'une ou l'autre des deux tuyères ou pluralités de tuyères étant alimentée en ergols simultanément par les deux réservoirs de l'un ou l'autre couple de réservoirs associés, le procédé de gestion d'ergol selon l'invention est avantageusement tel qu'après la détection de la vidange complète d'un premier réservoir d'un premier ergol, l'arrêt de la manoeuvre en cours, la commutation de l'alimentation à partir du deuxième réservoir du premier ergol, et, éventuellement, la commutation de la propulsion sur l'une des tuyères ou pluralités de tuyères après pollution de l'autre tuyère ou pluralité de tuyères par arrivée du gaz de pressurisation du premier ergol résultant de la vidange complète du premier réservoir du premier ergol, à alimenter l'une ou l'autre des deux tuyères ou pluralités de tuyères, ou uniquement celle qui n'est pas polluée par du gaz de pressurisation, à partir du deuxième réservoir du premier ergol et simultanément de l'un ou l'autre des deux réservoirs du deuxième ergol.

Dans les différentes configurations dans lesquelles l'installation d'alimentation en ergol des moteurs comprend, pour au moins un ergol, deux réservoirs d'ergol liquide à tension de surface, comme présenté ci-dessus, le procédé de gestion d'ergol selon l'invention peut avantageusement consister en outre, après la détection de la vidange complète d'un premier réservoir d'un ergol et commutation de l'alimentation de l'une et/ou l'autre des tuyères ou pluralités de tuyères sur le deuxième réservoir du même ergol, et éventuellement après restauration de l'attitude du satellite, à affecter les quantités résiduelles d'ergols dans les réservoirs à une durée de vie résiduelle du satellite en orbite et/ou à la ré-orbitation du satellite sur une orbite cimetière.

Avantageusement enfin, pour obtenir une grande finesse de détection par le procédé de détection de la vidange complète d'un réservoir selon l'invention, ce procédé peut consister, de plus, à échantillonner le signal d'au moins un capteur de pression à une fréquence sensiblement égale à la moitié de la fréquence d'actionnement d'une tuyère ou pluralité de tuyères, pour une détection des oscillations de pression consécutives aux ouvertures et fermetures de la vanne d'alimentation correspondante.

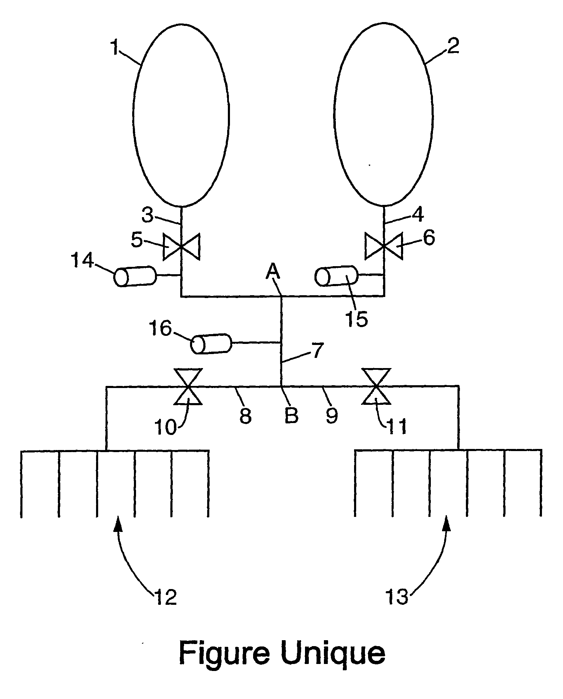

D'autres caractéristiques et avantages de l'invention ressortiront de la description donnée ci-dessous, à titre non limitatif, d'un exemple de réalisation décrit en référence au dessin annexé, comprenant une unique figure représentant schématiquement un sous-système propulsif de satellite avec deux réservoirs d'un même ergol pour alimenter sélectivement l'une ou l'autre de deux pluralités de tuyères de commande d'attitude et/ou d'orbite du satellite, sachant que ces pluralités de tuyères sont alimentées en un deuxième ergol contenu dans deux autres réservoirs par un circuit miroir de celui de la figure unique annexée.

On suppose que la figure unique représente celui des deux sous-systèmes propulsifs, avec chacun deux réservoirs d'un même ergol qui est l'un respectivement de deux ergols dont l'un est un carburant et l'autre un comburant, et dont l'un des deux réservoirs est celui des quatre réservoirs qui sera le premier complètement vidé au cours de la durée de vie utile d'un satellite en orbite.

Ce sous système propulsif comprend donc les deux réservoirs 1 et 2, contenant un même ergol à tension de surface et liquide, par exemple du mono-méthyl hydrazine, ou du tétroxyde d'azote, et un pressurant ou gaz de pressurisation, tel que de l'hélium, qui met l'ergol en pression dans les réservoirs 1 et 2, pour l'alimentation en ergol liquide d'une conduite de vidange respective 3 ou 4 lorsqu'une vanne respective 5 ou 6 de vidange du réservoir respectif 1 ou 2, et montée sur la conduite de vidange respective 3 ou 4, est commandée à l'ouverture. Les conduites de vidanges 3 et 4 se rejoignent à leur extrémité aval, au niveau de l'extrémité amont, au point A, d'une conduite commune 7, dont l'extrémité aval, au point B, est en communication avec les extrémités amont de deux conduites d'alimentation 8 et 9, sur chacune desquelles est montée une vanne d'alimentation 10 ou 11, dont les commandes à l'ouverture et à la fermeture permettent de commander par intermittence et au cours de périodes alternées, l'alimentation en ergol d'un premier ou d'un second groupe de tuyères 12 ou 13 de commande d'attitude et/ou d'orbite du satellite, à l'extrémité aval de la conduite d'alimentation respective 8 ou 9.

Au moins un capteur de pression amont, tel que 14 ou 15, est monté sur chacune des conduites de vidanges 3 et 4, entre la vanne de vidange 5 ou 6 correspondante et l'extrémité amont A de la conduite commune 7, et de préférence à proximité en aval de la vanne de vidange 5 ou 6 correspondante.

De même, au moins un capteur de pression aval 16 est monté sur la conduite commune 7. Les vannes de vidange 5 et 6 et les vannes d'alimentation 10 et 11 sont des électrovannes disposées respectivement sur les conduites de vidange 3 et 4 et sur les conduites d'alimentation 8 et 9.

L'ergol liquide est capté, en sortie de chaque réservoir 1 ou 2, par un dispositif capillaire, telle qu'une éponge (non représentée) qui permet de fournir aux conduites de vidange 3 et 4 de l'ergol liquide jusqu'à ce que ce dernier ne puisse être capté par le dispositif capillaire, et ne représente que des résidus statiques liquides dans le réservoir 1 ou 2. La vidange complète d'un réservoir 1 ou 2 entraîne alors une transition entre l'ergol liquide et le gaz de pressurisation dans la conduite de vidange 3 ou 4 correspondante, puis dans la conduite commune 7, transition dont le passage va être détecté par l'un des deux capteurs de pression amont 14 et 15 et/ou le capteur de pression aval 16.

En effet, lors des mises en action du groupe de tuyères 12 ou 13, et donc lors de la consommation par ces tuyères 12 ou 13 d'ergol liquide provenant du réservoir 1 ou 2, les ouvertures et fermetures successives de la vanne d'alimentation 10 ou 11 (puisque les groupes de tuyères 12 et 13 sont actionnés par intermittence) créent des oscillations de pression qui génèrent des ondes de pression appelées « coups de bélier », qui parcourent la conduite d'alimentation 8 ou 9, la conduite commune 7 et la conduite de vidange 3 ou 4 d'aval en amont, et selon celle des vannes d'alimentation 10 et 11 qui est successivement ouverte et fermée alors que l'autre reste fermée, et celle des vannes de vidange 5 et 6 qui est ouverte alors que l'autre est fermée. Ces ondes d'oscillation de pression sont détectées au niveau du capteur aval 16 et du capteur de pression amont 14 ou 15 selon que la vanne de vidange 5 ou 6 est ouverte et l'autre fermée, par des variations de pression, de l'ordre de 0.05 MPa pour des pressions de l'ordre de 1 MPa par exemple, ces variations de pression étant discernables si le signal du capteur de pression 16, 14 ou 15 est correctement échantillonné. Ainsi, une fréquence d'échantillonnage du capteur de pression égale à la moitié de la fréquence d'actionnement des tuyères 12 ou 13 peut s'avérer suffisante pour observer ce phénomène.

Mais, lorsque des bulles, essentiellement de gaz de pressurisation, sont présentes dans la ligne d'alimentation constituée de l'une des conduites de vidange 3 et 4, de la conduite commune 7 et de l'une des conduites d'alimentation 8 et 9, l'effet amortissant de ces bulles atténue très fortement, voire fait même disparaître, ces variations de pression, ce qui permet de définir l'instant de passage des bulles au niveau d'un capteur de pression amont 14 ou 15 ou du capteur de pression aval 16, ce qui indique que le réservoir 1 ou 2 alimentant les tuyères 12 ou 13 est vide.

Ce signal, témoignant de la vidange complète du réservoir 1 ou 2 sollicité lors d'une manoeuvre, commande l'arrêt de cette manoeuvre.

Pour un système propulsif comportant deux réservoirs de même ergol, comme cela est le cas du système selon le schéma générique de la figure unique, cet arrêt de la manoeuvre en cours au moment de la vidange d'un réservoir 1 ou 2 doit intervenir, autant que possible, avant que les bulles de gaz ne parviennent dans la conduite commune 7, c'est-à-dire avant le point A. D'où l'intérêt d'avoir des capteurs de pression amont 14 et 15 positionnés autant que possible le plus en amont du point A. Les manoeuvres du satellite peuvent alors reprendre après basculement de l'alimentation des tuyères 12 ou 13 sur l'autre réservoir 2 ou 1, c'est-à-dire le réservoir dont la vanne de vidange 6 ou 5 était fermée lorsque le premier réservoir s'est trouvé complètement vidangé, ce changement de réservoir d'alimentation intervenant sans que l'ergol disponible pour les tuyères 12 ou 13 ne contienne de bulles issues du premier réservoir à présent complètement vidangé. Cette contrainte impose une grande vitesse de réaction du circuit de détection de la vidange complète d'un réservoir et de commande à la fermeture des vannes d'alimentation 10 et 11 pour avoir la capacité d'interrompre suffisamment rapidement toute manoeuvre en cours.

Cependant, dans le cas où cette interruption de manoeuvre en cours est trop tardive, et que des bulles de gaz en provenance du réservoir complètement vidangé sont parvenues dans la conduite commune 7, ou si les capteurs de pression amont 14 et 15 sont défaillants, ou si encore le système ne comprend qu'au moins un capteur de pression aval tel que 16, la stratégie proposée pour la gestion de l'ergol est d'utiliser la redondance procurée par la présence des deux groupes de tuyères 12 et 13, après avoir effectué le basculement de l'alimentation du réservoir complètement vidangé sur l'autre réservoir.

Par exemple, on suppose qu'une première manoeuvre, pour laquelle les tuyères 12 sont alimentées en ergol par le réservoir 1 (vannes 5 et 10 ouvertes et vannes 6 et 11 fermées), est interrompue par un critère de pression résultant d'un signal du capteur de pression aval 16 ou, dans le cas d'un circuit de détection et de commande à vitesse de réaction relativement limitée, du capteur de pression amont 14, qui détecte l'arrivée de bulles issues du réservoir 1 et parvenues jusque dans la conduite commune 7. La manoeuvre suivante, ou deuxième manoeuvre, est ensuite effectuée en alimentant les mêmes tuyères 12 à partir de l'autre réservoir 2, contenant encore de l'ergol liquide, c'est-à-dire en ouvrant la vanne de vidange 6 précédemment fermée et en maintenant les vannes d'alimentation 10 et 11 respectivement ouverte et fermée. Cette deuxième manoeuvre est ensuite interrompue par la perte de performance des tuyères 12, lors de l'arrivée à ces tuyères 12 des bulles issues du réservoir 1 et parvenues dans la conduite commune 7 avant l'interruption de la première manoeuvre. L'interruption de la deuxième manoeuvre se commande alors à partir d'un critère de dépointage du satellite, résultant de la perte de performance précitée des tuyères 12. Et la récupération de l'attitude du satellite s'effectue immédiatement ensuite en actionnant les tuyères redondantes que sont les tuyères 13, alimentées à partir du réservoir 2, par commande à l'ouverture de la vanne d'alimentation 11.

Le critère de dépointage, pour commander l'interruption de la deuxième manoeuvre, est réglé sur un seuil assez faible, pour permettre de peu perturber la mission du satellite en cours d'exécution, et éviter le passage du satellite en mode dégradé ou en mode de survie. Les manoeuvres suivantes s'effectuent en alimentant les tuyères 13 à partir du réservoir 2. A cet effet, la ligne d'alimentation constituée de la conduite de vidange 4, de la conduite commune 7 et de la conduite d'alimentation 9 est une ligne d'alimentation remplie d'ergol liquide et sans bulle, dans la mesure où le volume de la conduite commune 7, entre les points A et B, est inférieur au volume de la conduite d'alimentation 8, entre le point B et les tuyères 12 du groupe ayant connu la perte de performance précitée, lors de l'arrivée de bulles issues du réservoir 1 aux tuyères 12. En effet, dans cette configuration, les bulles ont été évacuées par les tuyères 12 ou piégées entre l'extrémité aval (au point B) de la conduite commune 7 et les tuyères 12. Afin de limiter la propagation ou le déplacement éventuel des bulles à long terme, une fermeture préventive de la vanne d'alimentation 10 sur la conduite d'alimentation 8 est possible et préférée.

On comprend que la mise en oeuvre du procédé de détection de la vidange complète d'un réservoir selon l'invention, et donc de tout procédé de gestion d'ergol qui le comprend comme l'une de ses étapes, nécessite, au minimum, un réservoir tel que 1 ou 2, à tension de surface, et au moins un capteur de pression, tel que 14, 15 ou 16, sur-échantilloné en sortie du réservoir, et permettant de détecter l'amortissement, ou la disparition, des oscillations de pression provoquées dans une ligne d'alimentation de tuyères telles que 12 ou 13 en ergol liquide par les commandes à l'ouverture et à la fermeture d'une vanne telle que 10 ou 11 d'alimentation de ces tuyères 12 ou 13, et d'arrêter le plan de manoeuvres du satellite.

La capacité de réaction du dispositif de la figure unique et mettant en oeuvre les procédés de l'invention est améliorée par l'utilisation d'un logiciel de commande de ce dispositif, permettant l'interruption de la vidange d'un réservoir tel que 1 ou 2 en cours de manoeuvre, par exemple sur la base de l'un et/ou l'autre des deux critères suivant.

Un premier critère peut être issu de l'analyse des informations données par au moins un capteur de pression tel que 14 ou 15 et/ou 16, par exemple comme décrit ci-dessus lors de la première manoeuvre pour laquelle le groupe de tuyères 12 est alimenté à partir du réservoir 1. Le temps de réaction doit permettre l'arrêt de la manoeuvre avant l'arrivée des bulles à l'extrémité amont de la conduite commune 7, soit au point A, à la suite d'une détection de l'amortissement ou de la disparition des ondes de pression lié(e) au passage de l'interface entre l'ergol liquide et les bulles de gaz au niveau du capteur de pression amont 14, ou avant l'arrivée des bulles aux tuyères 12 ou, de préférence, pas plus en aval que l'extrémité aval, au point B, de la conduite commune 7, à la suite d'une détection de l'amortissement ou de la disparition des ondes de pression par le capteur de pression amont 14 ou aval 16. Après cet arrêt de manoeuvre, un changement du groupe de tuyères actionné (les tuyères 13 au lieu des tuyères 12 dans cet exemple) n'est pas proposé si la détection des bulles est faite très en amont, par exemple par le seul capteur de pression amont 14, et sans que le capteur de pression aval 16 ne détecte un amortissement ou une disparition desdites ondes de pression.

Le second critère peut être un critère de dépointage d'attitude, comme, par exemple, pour la deuxième manoeuvre décrite ci-dessus, pour laquelle le groupe de tuyères 12 est alimenté à partir du réservoir 2. Le logiciel de mise en oeuvre du procédé de gestion d'ergol commande alors un changement du groupe de tuyères sollicité, qui est celui des tuyères 13, pour bénéficier d'ergol sans bulle et récupérer le pointage du satellite. Le logiciel de commande s'assure alors que le seuil de dépointage utilisé pour la commande décrite ci-dessus vérifie au moins les trois contraintes suivantes.

La première contrainte est que le seuil de dépointage doit être supérieur aux dépointages habituellement enregistré en manoeuvre du satellite, pour ne pas déclencher la commande décrite ci-dessus de façon intempestive, sans présence de bulles, donc avant toute détection de la vidange complète d'un réservoir.

La seconde contrainte est que ce seuil de dépointage soit inférieur au seuil acceptable pour toute mission du satellite qui est en cours d'exécution.

La troisième contrainte est que le seuil de dépointage soit inférieur au seuil de déclenchement du mode de reconfiguration du satellite qui est associé aux cas dégradés, en prenant une marge, pour permettre de récupérer l'attitude du satellite avec le groupe redondant de tuyères (par exemple les tuyères 13 dans l'exemple décrit ci-dessus).

Les procédés de détection de la vidange complète d'un réservoir d'ergol liquide et de gestion d'ergol à bord d'un satellite, tels que décrits ci-dessus, sont particulièrement intéressants pour assurer la gestion des réservoirs pour deux types d'ergols d'un satellite à propulsion bi-liquide en fin de vie, avec quatre réservoirs dont deux par type d'ergol, comme déjà mentionné ci-dessus pour la figure unique, qui ne représente que les deux réservoirs d'un type d'ergol (carburant ou comburant), alors que deux autres réservoirs, pour l'autre type d'ergol, peuvent également alimenter les deux groupes de tuyères 12 et 13 par des conduites de vidange analogues aux conduites 3 et 4, avec des vannes de vidanges analogues aux vannes 5 et 6, et sur lesquelles sont montés des capteurs de pression amont tels que 14 et 15, avec une conduite commune telle que 7 sur laquelle est monté au moins un capteur de pression aval tel que 16, et avec des conduites d'alimentation telles que 8 et 9, sur lesquelles sont montées des vannes d'alimentation telles que 10 et 11 respectivement.

Dans ce cas, durant les dernières années de la vie utile du satellite en orbite, avant de procéder à sa ré-orbitation ou dé-orbitation, des procédés connus d'estimation des ergols restants dans les réservoirs permettent d'identifier quel type d'ergol sera excédentaire( l'ergol oxydant ou l'ergol réducteur). La quantité de cet ergol en excédant, qui n'est pas utilisable car il n'y a plus à bord du satellite de quantité de l'autre type d'ergol pour consommer l'ergol en excédant, est appelée « résiduel dynamique ». Comme les performances des moteurs à tuyères tels que 12 et 13 avec un seul type d'ergol ne sont pas considérées comme étant suffisantes, ces « résiduels dynamiques » ne sont donc pas pris en compte dans les budgets d'ergol.

La première étape de la gestion des réservoirs en fin de vie du satellite consiste donc à identifier le type d'ergol en excédant. A titre d'exemple, on suppose qu'il s'agit de l'ergol stocké dans les deux réservoirs de l'autre ergol non représentés sur la figure unique, et dénommés troisième réservoir et quatrième réservoir.

Par la sélection des réservoirs alimentant l'un ou l'autre des groupes de tuyères 12 et 13 durant les dernières manoeuvres du satellite, on propose de maintenir les troisième et quatrième réservoirs à des niveaux identiques de remplissage selon les estimation d'ergol restant.

De même, par la sélection des réservoirs durant les dernières manoeuvres, on propose de maintenir, pour les réservoirs 1 et 2, le réservoir 1 avec un remplissage inférieur à celui du réservoir 2 de la quantité d'ergol nécessaire à la ré-orbitation ou dé-orbitation du satellite, selon les estimations d'ergol restant.

Le procédé de détection de la vidange complète d'un réservoir, tel que défini précédemment, est alors mis en oeuvre, et lorsque la vidange complète du réservoir 1 est détectée, la manoeuvre en cours est interrompue, et la fin de vie du satellite est déclarée.

Le basculement de l'alimentation des tuyères 12 ou 13 sur le réservoir 2 redondant est ensuite effectué selon le procédé précédemment décrit, et la ré-orbitation ou dé-orbitation du satellite est effectuée par une alimentation des tuyères à partir du réservoir 2, en un ergol, et alternativement à partir des réservoirs 3 et 4, maintenus à un niveau sensiblement identique, pour l'autre ergol.

Il convient de noter que le procédé de basculement de l'alimentation d'un ergol d'un réservoir dont la vidange complète a été détectée, à l'autre réservoir de cet ergol tel que décrit précédemment, n'est pas applicable une seconde fois aux troisième et quatrième réservoirs et ne peut donc pas être renouvelé, car il tire parti de la redondance des groupes de tuyères 12 et 13 pour s'accommoder du basculement de l'alimentation d'un réservoir à l'autre. La détection de la vidange complète de l'un des troisième et quatrième réservoirs ne permettrait pas de basculer l'alimentation du deuxième ergol sur l'autre de ces troisième et quatrième réservoir, sans perte de contrôle du satellite après basculement de l'alimentation sur celui des troisième et quatrième réservoir qui apparaît redondant, car les tuyères de l'un des groupes, les tuyères 12 dans l'exemple décrit ci-dessus, peuvent être déjà contaminées par les bulles provenant du réservoir 1 dont la vidange complète a été détectée, et ces tuyères sont donc inutilisables.

En conséquence, après la détection de la vidange complète d'un premier réservoir d'un ergol, par exemple du réservoir 1, et commutation de l'alimentation de l'un et/ou de l'autre des deux groupes de tuyères 12 et 13 sur le deuxième réservoir du même ergol, par exemple le réservoir 2, et éventuellement après restauration de l'attitude du satellite, on affecte les quantités résiduelles d'ergol dans les réservoirs à une durée de vie résiduelle du satellite en orbite et/ou à la ré-orbitation ou dé-orbitation du satellite sur une orbite dite « cimetière ».

## Revendications

1. Procédé de détection de la vidange complète d'au moins un réservoir (1, 2)d'ergol liquide à tension de surface d'un satellite artificiel, en particulier d'un satellite géosynchrone (géostationnaire), sur lequel ledit réservoir (1, 2) d'ergol est relié, par une conduite de vidange (3, 4) sur laquelle est montée une vanne de vidange (5, 6) de réservoir, à au moins une conduite (7, 8, 9) d'alimentation d'une tuyère ou pluralité de tuyères (12, 13) de commande d'attitude et/ou orbite d'un système propulsif du satellite, et sur laquelle est montée une vanne (10, 11) d'alimentation de tuyère(s), commandée par intermittence à l'ouverture et à la fermeture pour actionner par intermittence ladite tuyère ou pluralité de tuyères (12, 13),
**caractérisé en ce qu'**il comprend au moins les étapes consistant, à l'aide d'au moins un capteur de pression (14, 15, 16) monté sur la conduite de vidange (3, 4) ou d'alimentation (7, 8, 9) entre lesdites vannes de vidange (5, 6) et d'alimentation(10, 11), à détecter les ondes d'oscillations de pression (coups de bélier) résultant des ouvertures et fermetures de ladite vanne d'alimentation (10, 11) et parcourant les conduites d'alimentation (7, 8, 9) et de vidange (3, 4) de la vanne d'alimentation (10, 11) en aval, vers ledit réservoir (1, 2) en amont, puis à détecter, à la suite d'une commande de ladite vanne d'alimentation (10, 11), l'amortissement au moins partiel (sinon la disparition) desdites ondes d'oscillations de pression témoignant du passage de la transition entre de l'ergol liquide et un gaz de pressurisation de l'ergol au niveau du capteur de pression (14, 15, 16), et donc de la vidange complète du réservoir (1, 2).

2. Procédé de gestion d'ergol à bord d'un satellite artificiel en orbite, comprenant un seul réservoir (1) d'ergol liquide à tension de surface par type d'ergol, ledit réservoir (1) étant relié, par une conduite de vidange (3) sur laquelle est montée une vanne (5) de vidange du réservoir, à deux conduites d'alimentation (8, 9) sur chacune desquelles est montée une vanne d'alimentation (10, 11) respective d'une tuyère ou pluralité de tuyères (12, 13) respective de commande d'attitude et/ou d'orbite d'un système propulsif du satellite, le procédé comprenant au moins les étapes consistant :
à alimenter par intermittence l'une ou l'autre des deux tuyères ou pluralités de tuyères (12, 13) en ergol par des commandes à l'ouverture et fermeture de l'une ou l'autre des vannes d'alimentation (10, 11), alors que ladite vanne de vidange (5) du réservoir est ouverte,
à contrôler la vidange en ergol dudit réservoir (1), **caractérisé en ce qu'**il comprend également au moins l'étape consistant à détecter la vidange complète de ce réservoir (1) par le procédé selon la revendication 1, et, à partir d'un signal d'au moins un capteur de pression (14, 16) détectant la vidange complète dudit réservoir (1), à commander l'arrêt de la manoeuvre en cours, et la fermeture de la vanne d'alimentation (10, 11) de ladite tuyère ou pluralité de tuyères (12, 13) actionnée au cours de ladite manoeuvre, afin de sécuriser des opérations à venir, et à effectuer des opérations d'extinction du satellite en pointage nominal par télécommandes manuelles avec une visibilité du sol assurée.

3. Procédé de gestion d'ergol à bord d'un satellite artificiel en orbite, comprenant, pour au moins un ergol, deux réservoirs (1, 2) d'ergol liquide à tension de surface reliés, chacun par une conduite de vidange (3, 4) respective sur laquelle est montée une vanne de vidange respective (5, 6), à l'extrémité amont (A) d'une conduite commune (7), dont l'extrémité aval ( B) est reliée en parallèle à chacune de deux tuyères ou pluralités de tuyères (12, 13) de commande d'attitude et/ou d'orbite d'un système propulsif du satellite, par une conduite d'alimentation respective (8, 9) sur laquelle est montée une vanne d'alimentation (10, 11) respective de la tuyère ou pluralité de tuyères correspondante (12, 13), le procédé comprenant au moins les étapes consistant:
- à alimenter par intermittence l'une ou l'autre des deux tuyères ou pluralité de tuyères (12, 13) en ergol par des commandes à l'ouverture et fermeture de l'une ou l'autre des vannes d'alimentation (10, 11), alors que l'une des vannes de vidange (5, 6) est ouverte et l'autre fermée, de sorte que l'ergol est vidangé de l'un au moins des deux réservoirs (1, 2),
- à fermer la vanne de vidange (5, 6) précédemment ouverte et ouvrir celle précédemment fermée, pour basculer l'alimentation des tuyères ou pluralités de tuyères (12, 13) depuis le réservoir précédemment vidangé (1, 2) à partir de l'autre réservoir, et
- à répéter, dans la mesure des besoins pour la commande d'attitude et/ou d'orbite du satellite,les deux étapes précédentes, **caractérisé en ce qu'**il comprend de plus au moins les étapes consistant :
- à contrôler la vidange en ergol liquide des deux réservoirs (1, 2), et à détecter la vidange complète d'un premier réservoir (1) par le procédé selon la revendication 1, puis à commander l'arrêt de la manoeuvre en cours et à commuter l'alimentation en ergol liquide du premier réservoir (1), qui est vide, sur le second réservoir (2), par une commande appropriée à l'ouverture de la vanne de vidange (6) dudit second réservoir (2).

4. Procédé de gestion d'ergol selon la revendication 3, **caractérisé en ce qu'**il consiste à contrôler la vidange des deux réservoirs (1, 2) et à détecter la vidange complète d'un premier réservoir (1) à l'aide d'au moins un capteur de pression aval (16), monté sur ladite conduite commune (7), et/ou d'au moins un capteur de pression amont (14, 15) monté sur chacune des deux conduites de vidange (3, 4), entre l'extrémité amont (A) de la conduite commune (7) et la vanne (5, 6) de vidange de réservoir correspondante.

5. Procédé de gestion d'ergol selon la revendication 4, **caractérisé en ce que,** si la détection de la vidange complète du premier réservoir (1) est assurée par un capteur de pression amont (14), avant que du gaz de pressurisation de l'ergol n'atteigne ladite conduite commune (7), le procédé comprend également, après la commande de l'arrêt de la manoeuvre en cours, la reprise d'au moins une manoeuvre par l'actionnement de l'une ou l'autre des deux tuyères ou pluralités de tuyères (12, 13), après commutation de leur alimentation sur le second réservoir (2) du même ergol.

6. Procédé de gestion d'ergol selon la revendication 4, **caractérisé en ce que,** si la détection de la vidange complète du premier réservoir (1) est assurée par un capteur de pression aval (16), le procédé comprend de plus, après l'arrêt de la manoeuvre en cours, des étapes consistant à commander la commutation de l'alimentation de ladite tuyère ou pluralité de tuyères (12, 13), en action lors de la détection de la vidange complète, sur le second réservoir (2) du même ergol, jusqu'à la détection d'une perturbation du fonctionnement de ladite tuyère ou pluralité de tuyères (12, 13), à commander alors la fermeture de la vanne (10, 11) d'alimentation de ladite tuyère ou pluralité de tuyères (12, 13) et l'ouverture de la vanne d'alimentation de l'autre tuyère ou pluralité de tuyères, pour compenser les conséquences de ladite perturbation sur l'attitude et/ou l'orbite du satellite, puis à commander toute manoeuvre postérieure en alimentant ladite autre tuyère ou pluralité de tuyères (12, 13) à partir du deuxième réservoir (2) du même ergol.

7. Procédé de gestion d'ergol selon la revendication 6, **caractérisé en ce qu'**il consiste à assurer la détection de ladite perturbation du fonctionnement de la tuyère ou pluralité de tuyères (12, 13) en action lors de la détection de la vidange complète du premier réservoir (1), à l'aide d'un critère de dépointage d'attitude du satellite, et à récupérer le pointage par l'actionnement de l'autre tuyère ou pluralité de tuyères (13, 14), alimentée par le deuxième réservoir (2) du même ergol.

8. Procédé de gestion d'ergol selon la revendication 7, **caractérisé en ce que** le critère de dépointage consiste à utiliser un seuil de dépointage vérifiant les contraintes suivantes :
- être supérieur aux dépointages enregistrés habituellement en manoeuvre, afin de ne pas déclencher de façon intempestive les opérations prévues après la détection de ladite perturbation, avant la détection de la vidange complète du premier réservoir (1),
- être inférieur à un seuil acceptable pour une mission, si celle-ci est en cours d'exécution, et
- être inférieur à un seuil de déclenchement du mode de reconfiguration associé aux cas dégradés, en prenant une marge afin de permettre la récupération de l'attitude du satellite par actionnement de l'autre tuyère ou pluralité de tuyères (12, 13).

9. Procédé de gestion d'ergol selon l'une quelconque des revendications 2 à 8, **caractérisé en ce que** l'étape de commande de l'arrêt de la manoeuvre en cours est assurée à partir d'un signal délivré par un capteur de pression (14 , 15, 16) et/ou à l'aide d'un critère issu d'une analyse des informations données par au moins un capteur de pression (14, 15, 16).

10. Procédé de gestion d'ergol selon l'une quelconque des revendications 3 à 9, pour un système propulsif de satellite artificiel à deux ergols contenus chacun dans deux réservoirs d'ergols liquides à tension de surface, formant deux couples de réservoirs associés dont chacun comprend un réservoir d'un premier ergol et un réservoir d'un second ergol, l'une ou l'autre des deux tuyères ou pluralités de tuyères (12, 13) étant alimentée en ergols simultanément par les deux réservoirs de l'un ou l'autre couple de réservoirs associés, **caractérisé en ce qu'**après la détection de la vidange complète d'un premier réservoir (1) d'un premier ergol, l'arrêt de la manoeuvre en cours, la commutation de l'alimentation à partir du deuxième réservoir (2) du premier ergol, et, éventuellement, la commutation de la propulsion sur l'une des tuyères ou pluralités de tuyères (12, 13) après pollution de l'autre tuyère ou pluralité de tuyères par arrivée d'un gaz de pressurisation du premier ergol résultant de la vidange complète du premier réservoir (1) de premier ergol, à alimenter l'une ou l'autre des deux tuyères ou pluralités de tuyères (12, 13), ou uniquement celle qui n'est pas polluée par du gaz ce pressurisation, à partir du deuxième réservoir (2) du premier ergol et simultanément de l'un ou l'autre des deux réservoirs du deuxième ergol.

11. Procédé de gestion d'ergol selon l'une quelconque des revendications 3 à 10, **caractérisé en ce qu'**il consiste, après la détection de la vidange complète d'un premier réservoir (1) d'un ergol et commutation de l'alimentation de l'une et/ou l'autre des tuyères ou pluralités de tuyères (12, 13) sur le deuxième réservoir (2) du même ergol, et éventuellement après restauration de l'attitude du satellite, à affecter les quantités résiduelles d'ergols dans les réservoirs à une durée de vie résiduelle du satellite en orbite et/ou à un changement d'orbite du satellite sur une orbite cimetière.

12. Procédé selon l'une quelconque des revendications 1 à 11, **caractérisé en ce qu'**il consiste de plus à échantillonner le signal d'au moins un capteur de pression (14, 15, 16) à une fréquence sensiblement égale à la moitié de la fréquence d'actionnement d'une tuyère ou pluralité de tuyère (12, 13), pour une détection des oscillations de pression consécutives aux ouvertures et fermetures de la vanne d'alimentation correspondante (10, 11).

## Claims

1. A method of detecting complete emptying of at least one tank (1, 2) for surface tension liquid propellant in an artificial satellite, in particular a geosynchronous (geostationary) satellite on board which said tank (1, 2) is connected by an emptying pipe (3, 4) having a tank-emptying valve (5, 6) mounted therein to at least one pipe (7, 8, 9) for feeding a nozzle or a plurality of nozzles (12, 13) for controlling the attitude and/or orbit in a propulsion system of the satellite, said at least one pipe having a nozzle-feed valve (10, 11) mounted therein that is controlled to open and close intermittently in order to actuate said nozzle or plurality of nozzles (12, 13) intermittently,
the method being **characterized in that** it includes at least the steps consisting in using at least one pressure sensor (14, 15, 16) mounted in the emptying pipe (3, 4) or the feed pipe (7, 8, 9) between said emptying and feed valves (5, 6; 10, 11), to detect pressure oscillation waves (hammering) that result from opening and closing said feed valve (10, 11) and that travel along the feed and emptying pipes (7, 8, 9; 3, 4) from the downstream feed valve (10, 11) towards said upstream tank (1, 2), and then following operation of said feed valve (10, 11), in detecting the at least partial damping (if not disappearance) of said pressure oscillation waves indicating that the transition between the liquid propellant and the propellant pressurization gas has gone past the pressure sensor (14, 15, 16), and thus indicating that the tank (1, 2) is completely empty.

2. A method of managing propellant on board an artificial satellite in orbit, having a single tank (1) for surface tension liquid propellant per propellant type, said tank (1) being connected via an emptying pipe (3) in which there is mounted a tank-emptying valve (5) to two feed pipes (8, 9) each of which has a respective feed valve (10, 11) mounted therein for feeding a respective nozzle or plurality of nozzles (12, 13) of a satellite propulsion system for controlling the attitude and/or orbit of the satellite, the method comprising at least the steps consisting:
· in feeding one or the other of the two nozzles or pluralities of nozzles (12, 13) intermittently with propellant by causing one or other of the feed valves (10, 11) to open and close, while said tank-emptying valve (5) is open; and
· in monitoring the emptying of propellant from said tank (1), the method being **characterized in that** it also comprises at least one step consisting in detecting the complete emptying of said tank (1) by the method according to claim 1, and on the basis of a signal from at least one pressure sensor (14, 16) detecting that said tank (1) has emptied completely, in causing the current maneuver to be stopped, and in closing the feed valve (10, 11) of said nozzle or plurality of nozzles (12, 13) actuated during said maneuver, in order to make forthcoming operations safe, and in performing operations for decommissioning the satellite in nominal alignment by manual remote control with ensured ground visibility.

3. A method of managing propellant on board an artificial satellite in orbit, the satellite comprising for at least one propellant, two tanks (1, 2) for surface tension liquid propellant, each connected by a respective emptying pipe (3, 4) having a respective emptying valve (5, 6) connected therein to the upstream end (A) of a common pipe (7) having a downstream end (B) connected in parallel to each of two nozzles or pluralities of nozzles (12, 13) for controlling the attitude and/or the orbit in a propulsion system of the satellite, via respective feed pipes (8, 9) each having a respective feed valve (10, 11) mounted therein for feeding the corresponding nozzle or plurality of nozzles (12, 13), the method comprising at least the steps consisting:
· in intermittently feeding one or the other of the two nozzles or pluralities of nozzles (12, 13) with propellant by causing one or the other of the feed valves (10, 11) to open and close, while one of the emptying valves (5, 6) is open and the other closed, so that the propellant is emptied from at least one of the two tanks (1, 2);
· in closing the previously-open emptying valve (5, 6) and opening the previously-closed valve, to switch over the feed to the nozzles or pluralities of nozzles (12, 13) from the previously-emptied tank (1, 2) to the other tank; and
· in repeating, depending on requirements for controlling the attitude and/or the orbit of the satellite, the two preceding steps, the method being **characterized in that** it further comprises at least the steps consisting:
· in monitoring the emptying of liquid propellant from the two tanks (1, 2), and in detecting the complete emptying of a first tank (1) by the method of claim 1, and then in causing the current maneuver to be stopped and switching the liquid propellant feed from the first tank (1) which is empty, to the second tank (2) by appropriately opening the emptying valve (6) of said second tank (2).

4. The method of managing propellant according to claim 3, **characterized in that** it consists in monitoring the emptying of the two tanks (1, 2) and in detecting complete emptying of a first tank (1) using at least one downstream pressure sensor (16) mounted in said common pipe (7), and/or at least one upstream pressure sensor (14, 15) mounted in each of the two emptying pipes (3, 4) between the upstream end (A) of the common pipe (7) and the corresponding tank-emptying valve (5, 6).

5. The method of managing propellant according to claim 4, **characterized in that,** if detection of complete emptying of the first tank (1) is provided by an upstream pressure sensor (14) before propellant pressurization gas reaches said common pipe (7), the method also comprises, after causing the current maneuver to be stopped, restarting at least one maneuver by actuating one or the other of the two nozzles or pluralities of nozzles (12, 13) after switching over their feed to the second tank (2) for the same propellant.

6. The method of managing propellant according to claim 4, **characterized in that,** if complete emptying of the first tank (1) is detected by a downstream pressure sensor (16), the method further comprises, after stopping the current maneuver, steps consisting in controlling the switching over of the feed of said nozzle or plurality of nozzles (12, 13) in action during the detection of complete emptying to the second tank (2) for the same propellant, until a disturbance in the operation of said nozzle or plurality of nozzles (12, 13) is detected, and then in causing the feed valve (10, 11) for said nozzle or plurality of nozzles (12, 13) to close and the feed valve for the other nozzle or plurality of nozzles to open, in order to compensate for the consequences of said disturbance on the attitude and/or orbit of the satellite, and then in controlling any subsequent maneuver by feeding said other nozzle or plurality of nozzles (12, 13) from the second tank (2) for the same propellant.

7. The method of managing propellant according to claim 6, **characterized in that** it consists in detecting said disturbance in the operation of the nozzle or plurality of nozzles (12, 13) in action during detection of complete emptying of the first tank (1) by means of a satellite attitude misalignment criterion, and in recovering the alignment by actuating the other nozzle or plurality of nozzles (12, 13) fed from the second tank (2) of the same propellant.

8. The method of managing propellant according to claim 7, **characterized in that** the misalignment criterion consists in using a misalignment threshold that satisfies the following constraints:
· being greater than the misalignments usually encountered while maneuvering so as to avoid, prior to detecting complete emptying of the first tank (1), any untimely triggering of the operations planned for after detecting said disturbance;
· being less than an acceptable threshold for a mission if a mission is being executed; and
· being less than a threshold for triggering the reconfiguration mode associated with fail-soft operation, taking a margin so as to enable the attitude of the satellite to be recovered by actuating the other nozzle or plurality of nozzles (12, 13).

9. The method of managing propellant according to any one of claims 2 to 8, **characterized in that** the step of causing the current maneuver to stop is implemented on the basis of a signal delivered by a pressure sensor (14, 15, 16) and/or with the help of a criterion derived from an analysis of information given by at least one pressure sensor (14, 15, 16).

10. The method of managing propellant according to any one of claims 3 to 9, for an artificial satellite propulsion system using two propellants each contained in two tanks for surface tension liquid propellants, forming two pairs of associated tanks each comprising a tank of a first propellant and a tank of a second propellant, one or the other of two nozzles or pluralities of nozzles (12, 13) being fed with propellants simultaneously by the two tanks of one or the other of the associated pairs of tanks, the method being **characterized in that** after detecting complete emptying of a first tank (1) of a first propellant, stopping the current maneuver, switching the feed to the second tank (2) of the first propellant, and optionally switching propulsion to one of the nozzles or pluralities of nozzles (12, 13) after the other nozzle or plurality of nozzles has been polluted by the arrival of a gas for pressurizing the first propellant as a result of the first tank (1) for the first propellant becoming completely empty, it consists in feeding one or the other of the two nozzles or pluralities of nozzles (12, 13) or only the nozzle or nozzles not polluted by the pressurization gas, from the second tank (2) of the first propellant and simultaneously from one or the other of the two tanks of the second propellant.

11. The method of managing propellant according to any one of claims 3 to 10, **characterized in that** after detecting complete emptying of a first tank (1) of a propellant and switching the feed of one and/or the other of the nozzles or pluralities of nozzles (12, 13) to the second tank (2) of the same propellant, and optionally after restoring the attitude of the satellite, it consists in allocating the residual quantities of propellant in the tanks to a residual lifetime for the satellite in orbit and/or to changing the satellite's orbit to a graveyard orbit.

12. The method according to any one of claims 1 to 11, **characterized in that** it consists further in sampling the signal from at least one pressure sensor (14, 15, 16) at a frequency substantially equal to half the actuating frequency of a nozzle or a plurality of nozzles (12, 13) in order to detect oscillations in pressure following the opening and closing of the corresponding feed valve (10, 11).

## Patentansprüche

1. Verfahren zur Erfassung der vollständigen Entleerung von wenigstens einem Behälter (1, 2) für flüssiges Ergol mit Oberflächenspannung eines künstlichen Satelliten, insbesondere eines geosynchronen (geostationären) Satelliten, auf dem der Ergolbehälter (1, 2) durch eine Entleerungsleitung (3, 4), an welcher ein Entleerungsventil (5, 6) des Behälters angebracht ist, mit wenigstens einer Versorgungsleitung (7, 8, 9) einer Düse oder Mehrzahl von Düsen (12, 13) zur Steuerung der Lage oder/und des Orbits eine Vortriebsystems des Satelliten verbunden ist, auf welcher ein Düsenversorgungsventil (10, 11) angebracht ist, das durch abwechselndes der Öffnen und Schließen gesteuert/geregelt wird, um abwechselnd die Düse oder die Mehrzahl von Düsen (12, 13) zu betätigen,
**dadurch gekennzeichnet, dass** es wenigstens die Schritte umfasst:
mittels eines Drucksensors (14, 15, 16), der an der Entleerungsleitung (3, 4) oder an der Versorgungsleitung (7, 8, 9) zwischen den Entleerungsventilen (5, 6) und den Versorgungsventilen (10, 11) angebracht ist, Druckoszillationswellen (Durckstoß) erfassen, die aus dem Öffnen und Schließen des Versorgungsventils (10, 11) hervorgehen und
die Versorgungsleitungen (7, 8, 9) und Entleerungsleitungen (3, 4) von dem stromabwärtigen Versorgungsventil (10, 11) zum stromaufwärtigen Behälter (1, 2) hin durchlaufen, dann in Folge eines Befehls des Versorgungsventils (10, 11) Erfassen der wenigstens teilweisen Dämpfung (ansonsten des Verschwindens) der Druckoszillationswellen, die den Durchlauf des Übergangs zwischen flüssigem Ergol und einem Ergol-Druckgas im Bereich des Drucksensors (14, 15, 16) anzeigen, und somit die vollständige Entleerung des Behälters (1, 2).

2. Verfahren zur Verwaltung von Ergol an Bord eines künstlichen Satelliten im Orbit, der, für jeden Typ vom Ergol, einen einzigen Behälter (1) für flüssiges Ergol mit Oberflächenspannung um fasst, wobei der Behälter (1) durch eine Entleerungsleitung (3), an welcher ein Entleerungsventil (5) des Behälters angebracht ist, mit zwei Versorgungsleitungen (8, 9) verbunden ist, auf denen ein jeweiliges Versorgungsventil (10, 11) einer jeweiligen Düse oder Mehrzahl von Düsen (12, 13) zum Steuern der Lage oder/und des Orbits eines Vortriebssystems des Satelliten angebracht sind, wobei das Verfahren wenigstens die Schritte umfasst:
abwechselndes Versorgen der einen oder der anderen von den zwei Düsen oder Mehrzahlen von Düsen (12, 13) mit Ergol durch Öffnungs- und Schließbefehle von dem einen oder dem anderen Versorgungsventil (10, 11), während das Entleerungsventil (5) geöffnet ist,
Steuern/Regeln der Ergolentleerung des Behälters (1),
**dadurch gekennzeichnet, dass** es wenigstens den Schritt umfasst:
Erfassen der vollständigen Entleerung dieses Behälters (1) durch das Verfahren nach Anspruch 1, und ausgehend von einem Signal von wenigstens einem Drucksensor (14, 16), der die vollständige Entleerung des Behälters (1) erfasst, Steuern des Stoppens des laufenden Manövers und des Schließens des Versorgungsventils (10, 11) der Düse oder der Mehrzahl von Düsen (12, 13), welche während des Manövers betätigt worden ist, um nachfolgende Operationen abzusichern und um Operationen zur Auslöschung des Satelliten in nominaler Ausrichtung durchzuführen durch manuelle Fernsteuerungen bei einer gewährleisteten Bodensichtbarkeit.

3. Verfahren zur Verwaltung von Ergol an Bord eines künstlichen Satelliten im Orbit, der für wenigstens ein Ergol zwei Behälter (1, 2) für flüssiges Ergol mit Oberflächenspannung umfasst, wobei jeder mit einer jeweiligen Entleerungsleitung (3, 4), auf welcher ein jeweiliges Entleerungsventil (5, 6) angebracht ist, mit dem stromaufwärtigen Ende (A) einer gemeinsamen Leitung (7) verbunden ist, deren stromabwärtiges Ende (B) parallel mit jeder von zwei Düsen oder Mehrzahlen von Düsen (12, 13) zur Steuerung/Regelung der Lage oder/und des Orbits eines Vortriebssystems des Satelliten verbunden ist durch eine jeweilige Versorgungsleitung (8, 9), auf welcher ein jeweiliges Versorgungsventil (10, 11), der entsprechenden Düse oder Mehrzahl von Düsen (12, 13) angebracht ist, wobei das Verfahren wenigstens die Schritte umfasst:
- abwechselnd die eine oder die andere der beiden Düsen oder Mehrzahlen von Düsen (12, 13) mit Ergol versorgen durch Befehle zum Öffnen oder Schließen des einen oder des anderen Versorgungsventils (10, 11), während eines der Entleerungsventile (5, 6) geöffnet ist und das andere geschlossen ist, derart, dass das Ergol aus wenigstens einem der zwei Behälter (1, 2) entleert wird,
- Schließen des zuvor geöffneten Entleerungsventils (5, 6) und Öffnen des zuvor geschlossenen, um die Versorgung der Düsen oder Mehrzahlen von Düsen (12, 13) vom zuvor geleerten Behälter (1, 2) auf den anderen umzustellen, und
- im Rahmen des Bedarfs für die Steuerung/Regelung der Lage oder/und des Orbits des Satelliten Wiederholen der beiden vorhergehenden Schritte, **dadurch gekennzeichnet, dass** das Verfahren ferner wenigstens die Schritte umfasst:
- Überwachen der Entleerung von flüssigem Ergol aus den beiden Behältern (1, 2) und Erfassen der vollständigen Entleerung eines ersten Behälters (1) durch das Verfahren gemäß Anspruch 1, dann Steuern des Stoppens des laufenden Manövers und die Versorgung mit flüssigem Ergol vom ersten entleerten Behälter (1) auf den zweiten Behälter (2) umschalten durch einen geeigneten Befehl zum Öffnen des Entleerungsventils (6) des zweiten Behälters (2).

4. Verfahren zur Verwaltung von Ergol nach Anspruch 3, **dadurch gekennzeichnet, dass** es darauf beruht, dass die Entleerung der beiden Behälter (1, 2) überwacht wird und die vollständige Entleerung eines ersten Behälters (1) erfasst wird durch wenigstens einen stromabwärtigen Drucksensor (16), der auf der gemeinsamen Leitung (7) angebracht ist, und/oder durch wenigstens einen stromaufwärtigen Drucksensor (14, 15), der auf jeder der beiden Entleerungsleitungen (3, 4) zwischen dem stromaufwärtigen Ende (A) der gemeinsamen Leitung (7) und dem Entleerungsventil (5, 6) des entsprechenden Behälters angebracht ist.

5. Verfahren zur Verwaltung von Ergol nach Anspruch 4, **dadurch gekennzeichnet, dass,** wenn die Erfassung der vollständigen Entleerung des ersten Behälters (1) durch einen stromaufwärtigen Drucksensor (14) gewährleistet wird, bevor Ergol-Druckgas die gemeinsame Leitung (7) erreicht, das Verfahren nach dem Befehl des Stoppens des laufenden Manövers auch das Wiederaufnehmen von wenigstens einem Manöver umfasst durch Betätigung der einen oder der anderen der beiden Düsen oder Mehrzahlen von Düsen (12, 13) nachdem ihre Versorgung auf den zweiten Behälter (2) mit dem gleichen Ergol umgeschaltet worden ist.

6. Verfahren zur Verwaltung von Ergol nach Anspruch 4, **dadurch gekennzeichnet, dass,** wenn die Erfassung der vollständigen Entleerung des ersten Behälters (1) durch einen stromabwärtigen Drucksensor (16) gewährleistet wird, das Verfahren nach dem Stoppen des laufenden Manövers ferner Schritte umfasst, die darauf beruhen, die Versorgung der Düse oder Mehrzahl von Düsen (12, 13), die während der Erfassung der vollständigen Entleerung im Einsatz ist, auf den zweiten Behälter (2) mit dem gleichen Ergol umzuschalten bis zur Erfassung einer Funktionsstörung der Düse oder Mehrzahl von Düsen (12, 13), dann das Schließen des Versorgungsventils (10, 11) der Düse oder der Mehrzahl von Düsen (12, 13) und das Öffnen des Versorgungsventils der anderen Düse oder Mehrzahl von Düsen zu steuern, um die Folgen der Störung auf die Lage oder/und den Orbit des Satelliten zu kompensieren, dann irgenwelches nachheriges Manöver zu steuern durch Versorgen der anderen Düse oder Mehrzahl von Düsen (12, 13) ausgehend vom zweiten Behälter (2) mit gleichem Ergol.

7. Verfahren zur Verwaltung von Ergol nach Anspruch 6, **dadurch gekennzeichnet, dass** es darauf beruht, die Erfassung der Funktionsstörung der Düse oder Mehrzahl von Düsen (12, 13), die während der Erfassung der vollständigen Entleerung des ersten Behälters (1) im Einsatz ist, durch ein Kriterium der Nicht-Ausrichtung der Lage des Satelliten zu gewährleisten, und die Ausrichtung durch Betätigung der anderen Düse oder Mehrzahl von Düsen, welche durch den zweiten Behälter (2) mit gleichem Ergol versorgt wird, wiederherzustellen.

8. Verfahren zur Verwaltung von Ergol nach Anspruch 7, **dadurch gekennzeichnet, dass** das Kriterium der Nicht-Ausrichtung darauf beruht, einen Nicht-Ausrichtungs-Schwellwert zu verwenden, der die folgenden Bedingungen überprüft:
- größer sein als die gespeicherten gewöhnlichen Nicht-Ausrichtungen beim Manöver, um nicht in unangebrachter Weise die nach der Erfassung der Störung vorgesehenen Operationen auszulösen, bevor die vollständige Entleerung des ersten Behälters (1) erfasst ist,
- kleiner sein als ein für eine Mission akzeptierbarer Schwellwert, wenn diese gerade ausgelöscht wird, und
- kleiner sein als ein Schwellwert für die Auslösung des Rekonfigurationsmodus, welcher verschlechterten Fällen zugeordnet ist, indem eine Spanne genommen wird, um die Wiederherstellung der Lage des Satelliten durch Betätigung der anderen Düse oder Mehrzahl von Düsen (12, 13) zu ermöglichen.

9. Verfahren zur Verwaltung von Ergol nach einem der Ansprüche 2 bis 8, **dadurch gekennzeichnet, dass** der Schritt des Stoppbefehls des laufenden Manövers gewährleistet wird ausgehend von einem Signal, das von einem Drucksensor (14, 15, 16) ausgegeben wird, oder/und durch ein Kriterium, das von einer Analyse der durch wenigstens einen Drucksensor (14, 15, 16) abgegeben Informationen ausgegeben wird.

10. Verfahren zur Verwaltung von Ergol nach einem der Ansprüche 3 bis 9, für ein Vortriebssystem eines künstlichen Satelliten mit zwei Ergolen, wobei jedes in zwei Behältern für flüssiges Ergol mit Oberflächenspannung enthalten ist, wobei die Behälter zwei Paare von zugeordneten Behältern bilden, von denen jeder einen Behälter für ein erstes Ergol und einen Behälter für ein zweites Ergol umfasst, wobei die eine oder die andere Düse oder Mehrzahl von Düsen (12, 13) gleichzeitig mit Ergolen aus den beiden Behältern des einen oder des anderen Paares von zugeordneten Behältern versorgt wird, **dadurch gekennzeichnet, dass** nach der Erfassung der vollständigen Entleerung eines ersten Behälters (1) für ein erstes Ergol, dem Stoppen des laufenden Manövers, dem Umschalten auf die Versorgung ausgehend vom zweiten Behälter (2) für das erste Ergol, und gegebenenfalls dem Umschalten des Vortriebs auf die eine der Düsen oder Mehrzahlen von Düsen (12, 13) nach Verunreinigung der anderen Düse oder Mehrzahl von Düsen durch Auftreten eines Druckgases vom ersten Ergol, das aufgrund der vollständigen Entleerung des ersten Behälters (1) für das erste Ergol resultiert,
die eine oder die andere der beiden Düsen oder Mehrzahl von Düsen (12, 13) oder nur diejenige, welche durch das Druckgas nicht verunreinigt ist, ausgehend vom zweiten Behälter (2) für erstes Ergol und gleichzeitig von dem einen oder dem anderen Behälter für zweites Ergol versorgt wird.

11. Verfahren zur Verwaltung von Ergol nach einem der Ansprüche 3 bis 10, **dadurch gekennzeichnet, dass** es darauf beruht, nach der Erfassung der vollständigen Entleerung des ersten Behälters (1) für ein Ergol und nach dem Umschalten der Versorgung der einen oder/und der anderen der Düsen oder Mehrzahl von Düsen (12, 13) auf den zweiten Behälter (2) für das gleiche Ergol und gegebenenfalls nach dem Wiederherstellen der Lage des Satelliten, die übrigen Mengen von Ergolen in den Behältern für eine Restlebensdauer des Satelliten im Orbit zu verwenden oder/und für eine Veränderung des Orbits des Satelliten auf einen Friedhofsorbit.

12. Verfahren nach einem der Ansprüche 1 bis 11, **dadurch gekennzeichnet, dass** es ferner darauf beruht, das Signal des wenigstens einen Drucksensors (14, 15, 16) auf einer Frequenz auszuwählen, die im Wesentlichen gleich der Hälfte der Betätigungsfrequenz der einen Düse oder Mehrzahl von Düsen (12, 13) entspricht für eine Erfassung von Druckoszillationen, die dem Öffnen und Schließen des entsprechenden Versorgungsventils (10, 11) folgen.
